(19) Europäisches Patentamt

European Patent Office

Office européen des brevets

(11) **EP 1 731 890 A1**

(12) **EUROPEAN PATENT APPLICATION**

(43) Date of publication:
**13.12.2006 Bulletin 2006/50**

(51) Int Cl.:
*G01L 27/00* (2006.01)    *G01L 23/08* (2006.01)
*G01M 15/08* (2006.01)    *F02D 41/24* (2006.01)

(21) Application number: **05105039.1**

(22) Date of filing: **09.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Ford Global Technologies, LLC.**
**Dearborn, MI 48126 (US)**

(72) Inventors:
• **Vespasien, Jean-Marie**
**52064 Aachen (DE)**
• **Chevalier, Alain**
**4841 Henri-Chapelle (BE)**

• **Christen, Urs**
**52072 Aachen (DE)**
• **Vantine, Katie**
**52062 Aachen (DE)**
• **Moraal, Paul Eduard**
**6291 VP, Vaals (NL)**

(74) Representative: **Drömer, Hans-Carsten et al**
**Ford-Werke Aktiengesellschaft,**
**Patentabteilung NH/DRP,**
**Henry-Ford-Strasse 1**
**50725 Köln (DE)**

(54) **Method and apparatus for calibrating the gain of a cylinder pressure sensor of an internal combustion engine**

(57)     The invention relates to a method and an apparatus for calibrating the gain of a cylinder pressure sensor (10) of an internal combustion engine (12).

The object of the present invention is to provide a method and an apparatus which enable highly accurate measurements with low cost pressure sensors during normal operation of the engine.

A method is provided, in which said sensor gain S is identified during the compression stroke of the cylinder (14) to which the sensor (10) is applied, and which is characterized in that

■ said sensor gain S is calculated according to:

$$S = \frac{U_2 - U_1}{p_2 - p_1}$$

where $U_1$ denotes a first voltage at a first reference position ($\theta_1$) of the crank angle (18) of the engine (12), $U_2$ denotes a second voltage at a second reference position ($\theta_2$) of the crank angle (18) of the engine (12), $p_1$ denotes a first pressure within the cylinder (14) at said first reference position ($\theta_1$) and $p_2$ denotes a second pressure within the cylinder (14) at said second reference position ($\theta_2$), whereas $U_1$ and $U_2$ are output signals of the pressure sensor (10) and $p_1$ and $p_2$ are taken from lookup table stored in a memory unit.

EP 1 731 890 A1

**Description**

FIELD OF THE INVENTION

The present invention relates to a method for calibrating the gain S of a cylinder pressure sensor in an internal combustion engine, in which said sensor gain S is identified during the compression stroke of the cylinder to which the sensor is applied. Furthermore, the invention relates to an apparatus for calibrating the gain S of a cylinder pressure sensor of an internal combustion engine, comprising means for identifying the sensor gain S during the compression stroke of the cylinder to which the sensor is applied.

BACKGROUND OF THE INVENTION

Sophisticated control systems help to reduce fuel consumption and exhaust emission levels of internal combustion engines. Especially, in the case of diesel engines, improvements of the control systems are largely driven by regulatory requirements regarding the exhaust emission levels and customer expectations. Improvements could be achieved through the combination of new generations of fuel injection systems coupled with advanced electronics and control systems. It is expected that both regulatory requirements (notably emissions levels) and customer expectations drive a further sophistication of the internal combustion engine in terms of refinement, power, and emission levels.

In particular, the application of a cylinder pressure based control is expected to play a major role as an enabler for new combustion and aftertreatment technologies, which will be necessary to meet future requirements. For example, homogeneous charge compression-ignition (HCCI) in diesel engines is expected to have the potential to provide dramatic increases in fuel efficiency, while dramatically reducing $NO_x$ emissions. However, HCCI engines pose a number of difficult performance and/or control issues which can only be overcome by sophisticated control systems, e.g., systems based on cylinder pressure measurement.

While sensors for the measurement of the cylinder pressure are commonly used in the development process of automotive engines, the actual application in engine management systems has been hindered by a lack of suitable pressure sensors which combine accuracy and durability at low cost. However, these requirements must be fulfilled for mass application in automobiles.

JP 59193326 A discloses a calibration device for a cylinder pressure sensor. The device can calculate a theoretical pressure within the cylinder, which allows calibrating the cylinder pressure sensor. However, in order to calculate the pressure either the ignition or the fuel injection has to be suspended, e.g., the expansion stroke has to be skipped.

US-A-5 255 209 discloses a method for calculating the pressure in a cylinder of an internal combustion engine equipped with cylinder pressure sensors. The sensor gain S is calculated using three points and is based on isentropic compression with a constant polytropic coefficient, a model of the sensor and the definition of the gain S. A specific pressure is allocated to a sensor signal of a pressure sensor as a reference pressure for a pre-determined piston position. The sensor gain and, on the basis thereof, the absolute pressure value at arbitrary piston positions is calculated from this reference pressure signal and two further sensor signals at prescribed piston positions. The main disadvantage of the method in question results from the assumption of isentropic compression and the usage of pressure data measured online by the sensor to be calibrated for calculating the gain S. Due to this the intended approach is viable only if high accuracy, required by strategies based on the cylinder pressure data, can be achieved. Having a more accurate pressure measurement to account for model inaccuracies is seen as advantageous as high accuracy is generally required by strategies based on the cylinder pressure data.

OBJECT OF THE INVENTION

It is the object of the present invention to provide a method and an apparatus for calibrating the gain of a cylinder pressure sensor in an internal combustion engine, enabling highly accurate measurements with low cost pressure sensors during normal operation of the engine.

The object concerning the method is achieved by a method for calibrating the gain S of a cylinder pressure sensor in an internal combustion engine, in which said sensor gain S is identified during the compression stroke of the cylinder in which the sensor is installed, and which is characterized in that

■ said sensor gain S is calculated according to:

$$S = \frac{U_2 - U_1}{p_2 - p_1}$$

where $U_1$ denotes a first voltage at a first reference position ($\theta_1$) of the crank angle (18) of the engine (12), $U_2$ denotes a second voltage at a second reference position ($\theta_2$) of the crank angle (18) of the engine (12), $p_1$ denotes a first pressure within the cylinder (14) at said first reference position ($\theta_1$) and $p_2$ denotes a second pressure within the cylinder (14) at said second reference position ($\theta_2$),

whereas $U_1$ and $U_2$ are output signals of the pressure sensor (10) and $p_1$ and $p_2$ are taken from lookup table stored in a memory unit.

The object concerning the apparatus is achieved by an apparatus for calibrating the gain S of a cylinder pressure sensor in an internal combustion engine, comprising means for identifying the sensor gain S during the compression stroke of the cylinder in which the sensor is installed, and which is characterized in that said means comprise processing means and memory means, whereas

■ said memory means are adapted to store a voltage U as output signal of the pressure sensor,
■ said processing means are adapted to calculate the sensor gain S according to:

$$S = \frac{U_2 - U_1}{p_2 - p_1}$$

where $U_1$ denotes a first voltage at a first reference position ($\theta_1$) of the crank angle of the engine, $U_2$ denotes a second voltage at a second reference position ($\theta_2$) of the crank angle of the engine, $p_1$ denotes a first pressure within the cylinder at said first reference position ($\theta_1$) and $p_2$ denotes a second pressure within the cylinder at said second reference position ($\theta_2$), whereas said processing means are adapted to read $U_1$ and $U_2$ from said memory means in which stored before and adapted to take $p_1$ and $p_2$ from lookup table stored in said memory means.

Preferred embodiments of the invention are specified in the dependent claims and are described in the following.

SUMMARY OF THE INVENTION

According to the suggested method, an identification of the sensor gain is performed during the compression stroke of the respective cylinder. The compression stroke is preferred and used because the gradient of the pressure trace is high during the compression stroke, which is advantageous for the inventive method as can be seen below.

The main advantage of the inventive method in comparison with the conventional methods known in the state of the art is to avoid the usage of models like isentropic compression with a constant polytropic coefficient, in which the calculation ignores such losses as heat transfer and blow-by, for example.

According to the inventive method, the voltage U as an output signal of the pressure sensor is determined at two different reference positions, i.e., crank angles ($\theta_1, \theta_2$), during the compression stroke of the respective cylinder. These voltages $U_1$ and $U_2$ are stored in a memory unit for further processing.

The pressure values $p_1$ and $p_2$, which correspond to said reference positions ($\theta_1$) and ($\theta_2$), are taken from a lookup table stored in a memory unit. The function $p(\theta)$ pressure value p in relation to the crank angle $\theta$ is generated before, e.g. during the development of the engine on a test bench, and stored in a lookup table which is preferably implemented in the electronic control unit of the engine. For this purpose several engines of the same type could be used, averaging the values measured on each engine to determine the final pressure values. For each engine operating condition - for example described by engine load and engine speed - an independent lookup table is required. If the calibration of the sensor gain S is carried out under different engine operation conditions one lookup table is necesasary for each engine operating condition.

The sensor gain S is then calculated according to:

$$S = \frac{U_2 - U_1}{p_2 - p_1} \qquad (1)$$

In the following this equation is explained in detail.

The relation between the pressure $p$ applied to the pressure sensor for measuring the pressure within the cylinder of the engine and the voltage trace U thus generated can be assumed to be of the following form:

$$U = S(p-p_0) + U_0 \qquad (2)$$

where $p_0$ and $U_0$ denote a reference pressure and voltage level respectively, and S denotes the sensor gain (in [Volts/bar] or equivalent units).

Equation (2) can be applied to two different reference positions 1 and 2, corresponding to two different crank angles, i.e., positions of the crankshaft and, thus, corresponding to two different pressures, $p_1$ and $p_2$, within the cylinder:

$$U_1 = S (p_1 - p_0) + U_0 \qquad (3)$$

$$U_2 = S (p_2 - p_0) + U_0 \qquad (4)$$

Subtraction of the two equations (3) and (4) allows elimination of the unknown reference pressure and voltage and yields the following equation (1):

$$S (p_2 - p_1) = U_2 - U_1 \quad \Rightarrow \quad S = \frac{U_2 - U_1}{p_2 - p_1} \quad (1)$$

According to the inventive method, it is possible to calibrate the sensor, i.e., the pressure sensor gain, during engine operation, and, thus, to achieve accurate measurements of the actual pressure within the cylinder during operation of the engine. The invention makes it possible to use standard, e.g., low cost pressure sensors, as cylinder pressure sensors not only during the development of an engine but also during normal operation of the engine.

This enables a more sophisticated engine control system and, thus, a significant reduction of the fuel consumption and exhaust emission levels. Furthermore, the invention can be applied to new combustion and aftertreatment technologies such as HCCI engines, e.g., in order to adapt existing engine control methods and systems to these new technologies.

According to a preferred embodiment of the inventive method, the sensor gain S is calculated for more than one pair of reference positions $(\theta_1, \theta_2)$, whereas said calculated gain values $S(\theta_k)$ are averaged in order to achieve an averaged sensor gain $\hat{S}_i$ and a higher accuracy in calibration.

According to a preferred embodiment of the inventive method, said calculated gain values $S(\theta_k)$ are averaged according to:

$$\hat{S}_i = \frac{1}{n_1 - n_0} \sum_{k=n_0}^{n_1} S(\theta_k)$$

where n is the number of reference position pairs $(\theta_1,\theta_2)$ chosen during the compression stroke and $\hat{S}_i$ denotes the average value.

Alternatively, the entire voltage signal U and the corresponding pressure values p for an entire cylcle or a portion of it are stored in the memory unit, and a least square regression algorithm is applied over a defined crank angle window for calculating the sensor gain S.

In general depending on the requirements of the method used for determining the final value sensor gain value S, a larger dataset covering, for example, the entire cycle can be stored and used.

According to a preferred embodiment of the inventive method, said sensor gain S is calibrated at least at one engine operating condition, but can be calibrated at a plurality of engine operating conditions.

According to a preferred embodiment of the inventive method, said sensor gain S is calibrated at least at one engine operating condition. As mentioned above the sensor gain can be calibrated at one engine operation condition or a plurality of engine operating conditions. It is preferred to calibrate the sensor gain at several engine operation conditions to achieve more accurate results. But the number of engine operation conditions taken into consideration not only depends on the targeted accurancy but also on the memory available in the memory unit.

According to a preferred embodiment of the inventive method the first reference position $(\theta_1)$ is chosen after the bottom dead center at a point where each of the intake valves has closed.

In order to accurately calibrate the sensor gain S closed intake valves are preferred, so that compresssion can take place in the cylinder chamber and a noticeable pressure can be built up together with a respective pressure gradient. When the intake valves are closed, the cylinder represents a closed volume and the cylinder charge cannot pass through the intake valves. As mentioned above the compression stroke is preferred and used because the gradient of the pressure trace is high during the compression stroke, which is advantageous for calibration.

In order to accurately calibrate the sensor gain S, it is preferred to do so at repeatable operating conditions, e.g., during compression when the valves are closed and before fuel is injected for a given engine-operating condition, and at the most accurate portion of the pressure trace, e.g. close to top-dead center. A pressure gradient is also required as defined by the definition of a gain.

According to a preferred embodiment of the inventive method the first voltage $U_1$ of the pressure sensor is determined by averaging measurements of the voltage signal of the pressure sensor taken in an interval around the first reference position $(\theta_1)$ in order to receive more accurate calibration results.

According to a preferred embodiment of the inventive method, the second reference position $(\theta_2)$ is chosen close to the top dead centre but before any injection in the cylinder has occurred. The injection of fuel influences the circumstances, in particular the pressure, present in the cylinder chamber. For calibrating the sensor gain an isolated compression of the cylinder charge is preferred eliminating other effects. Due to this the second reference point is chosen close to the top dead centre but before any injection in the cylinder has occurred.

According to a preferred embodiment of the inventive method, the average value $\hat{S}_i$ is passed through a low pass filter. The sensor gain S should be passed through a low pass filter in order to filter high frequency changes of the sensor gain that can result from disturbances or measurement errors.

By passing through a low pass filter the sensor gain $\hat{S}_i$ could be used to calculate $S_{i+1}$ using the following equation:

$$S_{i+1} = \beta \cdot S_i + (1 - \beta)\hat{S}_i$$

The parameter $\beta$ determines the filter time constant ("forgetting factor") and can be scheduled as a function of engine operating conditions. This dependence on engine operating conditions can account for the possibility that the identification procedure described here yields better results under certain operating conditions than under others (for example, high engine speed versus low engine speed, with or without EGR).

According to a preferred embodiment of the inventive method the filter time constant of the low pass filter is scheduled as a function of the engine's operating conditions.

In a preferred embodiment, the first and second reference positions $(\theta_1,\theta_2)$ are triggered by a signal of a crank angle sensor.

According to another aspect, the invention relates to an apparatus for calibrating the sensor gain S of a cylinder pressure sensor of an internal combustion engine, comprising means for identifying the sensor gain S during the compression stroke of the cylinder to which the sensor is applied, and which is characterized in that the means comprise processing means and memory means, whereas the means are adapted as mentioned above.

With respect to internal combustion engines, which comprise an electronic control unit (ECU), embodiments of the inventive apparatus are preferred, which are characterized in that said memory means are part of the ECU.

For engines, in which each cylinder is provided with a separate pressure sensor, embodiments of the inventive apparatus are preferred, in which the memory means and the processing means are adapted to calculate the sensor gain S of each sensor by using a specific dataset, i.e., lookup table, for each cylinder.

Alternatively an averaged dataset for all cylinders can be used, if not sufficient memory is available for using a specific dataset for each cylinder.

According to a preferred embodiment of the inventive apparatus, said means are adapted to calculate the sensor gain S for more than one pair of reference positions $(\theta_1, \theta_2)$ in a crank angle window $[\theta_0 - \theta_n]$ under consideration and furthermore are adapted to average said calculated gain values $S(\theta_k)$ in order to achieve an averaged sensor gain $\hat{S}_i$ and in doing so a higher accuracy in calibration.

According to a preferred embodiment of the inventive apparatus, said means comprise a low pass filter through which the averaged sensor gain $\hat{S}_i$ is passed.

According to a preferred embodiment of the inventive apparatus, said means are adapted to schedule the filter time constant $\beta$ of the low pass filter as a function of the engine's operating conditions.

Furthermore, said means can be adapted to receive a signal of a crank angle sensor to trigger the first and second reference positions.

Preferably, the means are implemented by a microprocessor or microcontroller and a memory in which an algorithm implementing the inventive calibration method is stored.

Further advantages and features of the invention will become apparent from the following description of preferred embodiments of the invention.

BRIEF DESCRITPION OF THE DRAWINGS

The present invention will now be described, by way of example, with reference to the accompanying drawings, in which

Fig. 1     shows an embodiment of the inventive apparatus for calibrating the gain of a cylinder pressure sensor of an internal combustion engine, and

Fig. 2     shows an embodiment of the inventive method for calibrating the gain of a cylinder pressure sensor of an internal combustion engine.

DETAILED DESCRIPTION OF PREFERRED EMBODIMENTS

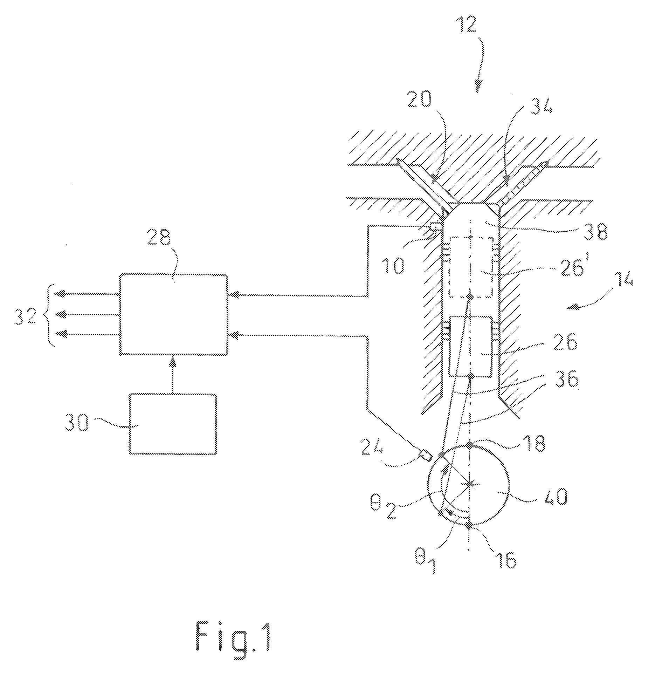

Figure 1 shows in a cross sectional view the cylinder 14 of an internal combustion engine 12 and an apparatus for calibrating, which is applied to the engine 12. A piston 26, 26' is connected to a crankshaft 40 via a connecting rod 36. Translatory motions of the piston 26, 26' within the cylinder 14 are translated via the connecting rod 36 into rotations of the crankshaft 40.

The position of the piston 26 within the cylinder 14 depends on the crankshaft angle $\theta$ (CA). Thus, the cylinder volume 38 is a function of the CA. The CA is electronically determined via a crankshaft position sensor 24 and provided to the processing means 28. At the bottom dead center (BDC) 16 of the crankshaft, the cylinder volume 38 has the highest possible value. Inversely, at the top dead center (TDC) 18 of the crankshaft, the cylinder volume 38 has the smallest possible value.

Figure 1 shows the piston 26 and the crankshaft 40 in a first position $(\theta_1)$ and in a second position $(\theta_2)$ during the compression stroke. A voltage U and a pressure p is allocated to these two positions, namely $U_1$, $U_2$, $p_1$ and $p_2$, for calibrating the sensor gain S during compression stroke.

A pressure sensor 10 measures the pressure within the cylinder 14, for example in the two mentioned positions $(\theta_1, \theta_2)$. The output signal of the pressure sensor 10 is a voltage U, which is guided to and processed by processing means 28 which can be implemented by an electronic control unit (ECU). The processing means 28 processed the signals $(\theta)$ of the crankshaft position sensor 24 and the signals (U) of the pressure sensor 10 together with the respective pressure values (p) stored in the memory means 30 as a function of crank angle for calibrating the sensor gain S.

Typically, the processing means 28 comprise a microprocessor which executes a control algorithm for setting operating conditions of the engine 12 such as the fuel injection. The control algorithm is stored in memory means 30 which can be part of the ECU. Control signals 32 of the processing means 28 drive actuators and/or control devices (not shown) in order to set the operating conditions of the engine 12.

As can be seen in figure 1 the cylinder 14 is provided with at least one inlet valve 20 and at least one exhaust valve 34 for gas exchange. When both valves 20,34 are closed, compreesion can take place in the cylinder 14.

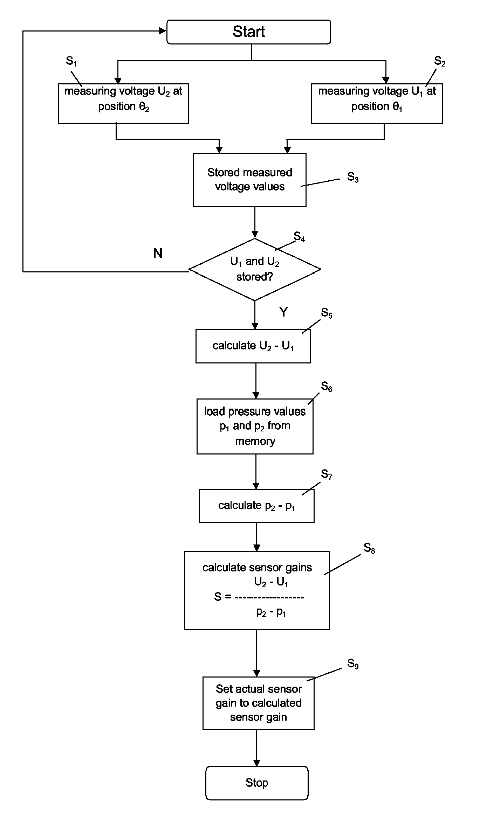

In the following, the method for calibrating a low cost pressure sensor according to the invention is explained in detail with reference to Fig. 2. In this description, reference is made to diesel engines. However, the disclosed ideas according to the invention also apply equally to other internal combustion engines such as gasoline engines without any restriction, unless otherwise stated.

Fig. 2 shows the flow diagram of an embodiment of an algorithm implementing the online calibration method of the sensor gain of a cylinder pressure sensor according to the invention.

In a first step S1 of the algorithm, the voltage $U_1$ is measured in a first reference position ($\theta_1$) of the crankshaft and piston, by using a pressure sensor. This voltage $U_1$ is forwarded to the processing means and stored in the memory means within step S3.

In a second step S2 of the algorithm, the voltage $U_2$ is measured in a second reference position ($\theta_2$) of the crankshaft and piston, respectively, by using the pressure sensor.This voltage $U_2$ is also forwarded to the processing means and stored in the memory means within step S3.

For steps S1 and S2 two reference positions ($\theta_1,\theta_2$) are chosen during the compression stroke of the cylinder and the piston. The crankshaft position sensor detects the position ($\theta_1,\theta_2$) of the crankshaft. The detected positions ($\theta_1, \theta_2$) are forwarded to the processing means and the memory means.

If this storage of $U_1$ and $U_2$ is done successfully the algorithm continues by calculating the voltage difference ($U_2 - U_1$) within step S5. Otherwise, the algorithm goes back to step 1 i.e. the algorithm starts again, as can be seen in step S4.

Within step S6 pressure values $p_1$ and $p_2$ corresponding to the two chosen reference positions ($\theta_1,\theta_2$) are taken from lookup table stored in the memory means. By doing this the engine operating condition on which the calibration procedure is based has to be taken into account, so that the specific lookup table is chosen relating to the respective engine operation condition.

Afterwards the algorithm continues by calculating the pressure difference ($p_2 - p_1$) within step S7.

In the following step S8 the processing means calculate the sensor gain S by using equation:

$$S = \frac{U_2 - U_1}{p_2 - p_1}$$

As mentioned above the sensor gain S can be calculated for more than one pair of reference positions ($\theta_1,\theta_2$) in a crank angle window [$\theta_0$- $\theta_n$] under consideration and then averaged in order to achieve more accurate results for the gain S (not shown in figure 2).

The calculated gain values $S(\theta_k)$ can be averaged according to:

$$\hat{S}_i = \frac{1}{n_1 - n_0} \sum_{k=n_0}^{n_1} \hat{S}(\theta_k)$$

where n is the number of reference position pairs ($\theta_1,\theta_2$) chosen during the compression stroke and $\hat{S}_i$ denotes the average value. In addition, said averaged sensor gain $\hat{S}_i$ can be passed through a low pass filter.

At the end of the procedure the actual sensor gain is set to the calculated sensor gain.

**Reference numerals**

10     cylinder pressure sensor
12     internal combustion engine
14     cylinder
16     bottom dead centre (BDC)
18     top dead centre (TDC)
20     inlet valve
24     crankshaft position sensor
26     piston at a first reference position ($\theta_1$)
26'    piston at a first reference position ($\theta_2$)

28      processing means
30      memory means
32      control signals
34      exhaust valve
36      connecting rod
38      cylinder volume
40      crankshaft

**Reference signs**

| | |
|---|---|
| $\theta$ | crankshaft angle |
| BDC | bottom dead center |
| $\beta$ | filter time constant |
| CA | crankshaft angle |
| ECU | electronic control unit |
| n | number of reference position pairs |
| $\theta_1$ | first reference position |
| $\theta_2$ | second reference position |
| $[\theta_0\text{-}\theta_n]$ | crank angle window under consideration |
| $p_1$ | pressure within the cylinder at a first reference position ($\theta_1$) |
| $p_2$ | pressure within the cylinder at a second reference position ($\theta_2$) |
| $S$ | gain of a cylinder pressure sensor |
| $\hat{S}_i$ | averaged sensor gain |
| $S(\theta_k)$ | gain of a cylinder pressure sensor at reference position ($\theta_k$) |
| TDC | top dead center |
| $U_1$ | first voltage at a first reference position ($\theta_1$) |
| $U_2$ | second voltage at a second reference position ($\theta_2$) |

**Claims**

1.   Method for calibrating the gain S of a cylinder pressure sensor (10) of an internal combustion engine (12), in which said sensor gain S is identified during the compression stroke of the cylinder (14) to which the sensor (10) is applied, **characterized in that**

     ■ said sensor gain S is calculated according to:

$$S = \frac{U_2 - U_1}{p_2 - p_1}$$

     where $U_1$ denotes a first voltage at a first reference position ($\theta_1$) of the crank angle (18) of the engine (12), $U_2$ denotes a second voltage at a second reference position ($\theta_2$) of the crank angle (18) of the engine (12), $p_1$ denotes a first pressure within the cylinder (14) at said first reference position ($\theta_1$) and $p_2$ denotes a second pressure within the cylinder (14) at said second reference position ($\theta_2$),
     whereas $U_1$ and $U_2$ are output signals of the pressure sensor (10) and $p_1$ and $p_2$ are taken from lookup table stored in a memory unit.

2.   Method according to claim 1,
     **characterized in that**
     the sensor gain S is calculated for more than one pair of reference positions ($\theta_1,\theta_2$), whereas said calculated gain values $S(\theta_k)$ are averaged in order to achieve an averaged sensor gain $\hat{S}_i$ and a higher accuracy in calibration.

3.   Method according to claim 2,
     **characterized in that**

said calculated gain values $S(\theta_k)$ are averaged according to:

$$\hat{S}_i = \frac{1}{n_1 - n_0} \sum_{k=n_0}^{n_1} S(\theta_k)$$

where n is the number of reference position pairs $(\theta_1, \theta_2)$ chosen during the compression stroke and $\hat{S}_i$ denotes the average value.

4. Method according to claim 1 or 2,
   **characterized in that**
   the entire voltage signal U is stored for an entire cylcle of the cylinder (14) or a portion of it in said memory unit, and a least square regression algorithm is applied over a predetermined crank angle window for calculating the sensor gain S.

5. Method according to any of the preceding claims,
   **characterized in that**
   said sensor gain S is calibrated at least at one engine operating condition.

6. Method according to any of the preceding claims,
   **characterized in that**
   the first reference position $(\theta_1)$ is chosen after the bottom dead center (16) at a point where each of the intake valves (20) has closed.

7. Method according to any of the preceding claims,
   **characterized in that**
   the first voltage $U_1$ of the pressure sensor (10) is determined by averaging measurements of the voltage signal of the pressure sensor (10) taken in an interval around the first reference position $(\theta_1)$.

8. Method according to any of the preceding claims,
   **characterized in that**
   the second reference position $(\theta_2)$ is chosen close to the top dead centre (18) but before any injection in the cylinder (14) has occurred.

9. Method according to any of the claims 2 to 8,
   **characterized in that**
   the average value $\hat{S}_i$ is passed through a low pass filter.

10. Method according to claim 9,
    **characterized in that**
    the filter time constant $\beta$ of the low pass filter is scheduled as a function of the engine's operating conditions.

11. Apparatus for calibrating the gain S of a cylinder pressure sensor (10) of an internal combustion engine (12), comprising means (28, 30) for identifying the sensor gain S during the compression stroke of the cylinder (14) to which the sensor (10) is applied
    **characterized in that**
    said means (28, 30) comprise processing means (28) and memory means (30), whereas

    ■ said memory means (30) are adapted to store a voltage U as output signal of the pressure sensor (10),
    ■ said processing means (28) are adapted to calculate the sensor gain S according to:

$$S = \frac{U_2 - U_1}{p_2 - p_1}$$

where $U_1$ denotes a first voltage at a first reference position ($\theta_1$) of the crank angle (18) of the engine (12), $U_2$ denotes a second voltage at a second reference position ($\theta_2$) of the crank angle (18) of the engine (12), $p_1$ denotes a first pressure within the cylinder (14) at said first reference position ($\theta_1$) and $p_2$ denotes a second pressure within the cylinder (14) at said second reference position ($\theta_2$), whereas said processing means (28) are adapted to read $U_1$ and $U_2$ from said memory means (30) in which stored before and adapted to take $p_1$ and $p_2$ from lookup table stored in said memory means.

12. Apparatus according to claim 11 for calibrating the gain S of a cylinder pressure sensor (10) of an internal combustion engine (12), which comprises an electronic control unit (ECU),
    **characterized in that**
    said memory means (30) are part of the ECU.

13. Apparatus according to claim 11 or 12 for calibrating the gain S of a cylinder pressure sensor (10) of an internal combustion engine (12), which comprises at least one cylinder, each cylinder is provided with a separate pressure sensor (10),
    **characterized in that**
    said memory means (30) and said processing means (28) are adapted to calculate said sensor gain S of each sensor (10) by using a specific dataset for each cylinder.

14. Apparatus according to any of the claims 11 to 13,
    **characterized in that**
    said means (28, 30) are adapted to calculate the sensor gain S for more than one pair of reference positions ($\theta_1$, $\theta_2$) in a crank angle window [$\theta_0$- $\theta_n$] under consideration and furthermore are adapted to average said calculated gain values $S(\theta_k)$ in order to achieve an averaged sensor gain $\hat{S}_i$ and in doing so a higher accuracy in calibration.

15. Apparatus according to any of the claims 11 to 14,
    **characterized in that**
    said means (28, 30) comprise a low pass filter through which the averaged sensor gain $\hat{S}_i$ is passed.

16. Apparatus according to claim 15,
    **characterized in that**
    the means (28, 30) are adapted to schedule the filter time constant $\beta$ of the low pass filter as a function of the engine's operating conditions.

Fig.1

Start

$S_1$

measuring voltage $U_2$ at position $\theta_2$

$S_2$

measuring voltage $U_1$ at position $\theta_1$

Stored measured voltage values — $S_3$

$S_4$

N

$U_1$ and $U_2$ stored?

Y

calculate $U_2 - U_1$ — $S_5$

load pressure values $p_1$ and $p_2$ from memory — $S_6$

calculate $p_2 - p_1$ — $S_7$

calculate sensor gains

$S_8$

$$S = \frac{U_2 - U_1}{p_2 - p_1}$$

Set actual sensor gain to calculated sensor gain — $S_9$

Stop

**European Patent Office**

## EUROPEAN SEARCH REPORT

Application Number

EP 05 10 5039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 255 209 A (KREBS ET AL) 19 October 1993 (1993-10-19) * abstract; claims 6-8; figure 1 * * column 2, line 36 - column 4, line 45 * ----- | 1-16 | G01L27/00 G01L23/08 G01M15/08 F02D41/24 |
| Y | EP 0 569 608 A (SIEMENS AKTIENGESELLSCHAFT) 18 November 1993 (1993-11-18) | 1-3,5-16 | |
| A | * abstract; claim 4; figures 1,2 * * column 2, line 2 - column 4, line 14 * ----- | 4 | |
| Y | DE 100 28 885 A1 (VOLKSWAGEN AG) 13 December 2001 (2001-12-13) | 1-3, 6-11, 14-16 | |
| A | * abstract; figures 1,2A,2B * * paragraph [0017] - paragraph [0021] * ----- | 4,5,12, 13 | |
| Y | FR 2 862 711 A (PEUGEOT CITROEN AUTOMOBILES SA; DELPHI TECHNOLOGIES INCORPORATED) 27 May 2005 (2005-05-27) | 4 | TECHNICAL FIELDS SEARCHED (IPC) |
| A | * abstract; figure 1 * * page 2, line 18 - page 18, line 22 * ----- | 1-3,5-16 | G01L G01M F02D |

The present search report has been drawn up for all claims

| Place of search | Date of completion of the search | Examiner |
|---|---|---|
| Munich | 4 November 2005 | Helm, B |

**ANNEX TO THE EUROPEAN SEARCH REPORT
ON EUROPEAN PATENT APPLICATION NO.**                EP 05 10 5039

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2005

| Patent document cited in search report | | Publication date | Patent family member(s) | | Publication date |
|---|---|---|---|---|---|
| US 5255209 | A | 19-10-1993 | NONE | | |
| EP 0569608 | A | 18-11-1993 | NONE | | |
| DE 10028885 | A1 | 13-12-2001 | NONE | | |
| FR 2862711 | A | 27-05-2005 | EP<br>US | 1548418 A1<br>2005125140 A1 | 29-06-2005<br>09-06-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59193326 A

- US 5255209 A